# EUROPÄISCHE PATENTANMELDUNG

(11) **EP 4 818 647 A1**
(43) Veröffentlichungstag der Anmeldung: **07.10.2026**
(21) Anmeldenummer: 26165547.6
(22) Anmeldetag: 17.03.2026
(51) Int. Cl.: G01D 5/14, G01D 3/08

(54) **KRAFTMASCHINE MIT WELLE UND DREHGEBER ZUM ERFASSEN VON ZUSTANDSINFORMATION DER WELLE**

(30) Priorität: 31.03.2025 DE 102025001104
(71) Anmelder: Baumer Germany GmbH & Co. KG, 78333 Stockach (DE)
(72) Erfinder: Köster, Sebastian Mario, 79822 Tittisee-Neustadt (DE); Sager, Raphael, 9500 Wil (CH); Keller, Sven, 8546 Islikon (CH)
(74) Vertreter: Strauss, Steffen

(57) **Zusammenfassung**

Die Erfindung betrifft eine Kraftmaschine (100) zum Antreiben einer Arbeitsmaschine (150). Die Kraftmaschine (100) umfasst eine rotierbare Antriebswelle (110), welche ausgebildet ist, bei einer Rotation der rotierbaren Antriebswelle (110) die Arbeitsmaschine (150) anzutreiben; einen Drehgeber (130, 140) mit einem an einer Stirnseite eines freien Endes der rotierbaren Antriebswelle (110) angebrachten Magneten (130) und einem in einem Soll-Abstand von dem Magneten (130) angeordneten Stator (140) mit einem Sensor (141), wobei der Sensor (141) einen Hallsensor (141) umfasst, welcher ausgebildet ist, wenigstens eine Komponente des von dem Magneten (130) erzeugten Magnetfelds zu erfassen, welches von dem Ist-Abstand (d) zwischen dem Magneten (130) und dem Hallsensor (141) abhängt, und wobei der Drehgeber (130, 140) ausgebildet ist, auf der Grundlage der von dem Hallsensor (141) erfassten wenigstens eine Komponente des Magnetfelds den Ist-Abstand (d) zwischen dem Magneten (130) und dem Stator (140) des Drehgebers (130, 140) zu erfassen, eine Steuereinrichtung (143), welche ausgebildet ist, auf der Grundlage eines Vergleichs des von dem Drehgeber (130, 140) erfassten Ist-Abstands (d) mit wenigstens einem Abstandsschwellenwert zu bestimmen, ob die Kraftmaschine (100) wartungsbedürftig ist und/oder ob die rotierbare Antriebswelle (110) und der Drehgeber (130, 140) der Kraftmaschine (100) korrekt eingebaut sind.

## Beschreibung

Die Erfindung betrifft eine Kraftmaschine mit einer rotierbaren Antriebswelle zum Antreiben einer Arbeitsmaschine und mit einem Drehgeber zum Erfassen von Zustandsinformationen einer rotierbaren Welle, beispielsweise Positions- und/oder Bewegungsinformationen der rotierbaren Antriebswelle.

Drehgeber werden häufig bei Arbeitsmaschinen bzw. Antriebsvorrichtungen eingesetzt, um Messgrößen wie Winkelstellung, Drehzahl, Drehrichtung und/oder Winkelbeschleunigung einer rotierenden Antriebswelle zu erfassen und an eine Steuerung zum Steuern bzw. Regeln zu übermitteln.

Es ist eine Aufgabe der vorliegenden Erfindung, eine verbesserte Kraftmaschine mit einer rotierbaren Antriebswelle und einem Drehgeber bereitzustellen, welche ausgebildet ist, zu überwachen, ob die Kraftmaschine wartungsbedürftig ist und/oder ob die Antriebswelle und der Drehgeber der Kraftmaschine korrekt eingebaut sind.

Diese Aufgabe wird gemäß einem ersten Aspekt der Erfindung durch eine Kraftmaschine (hierin auch als Antriebsvorrichtung bezeichnet) zum Antreiben einer Arbeitsmaschine (hierin auch als Abtriebsvorrichtung bezeichnet) gelöst. Dabei umfasst die Kraftmaschine gemäß dem ersten Aspekt eine rotierbare Antriebswelle, welche ausgebildet ist, bei einer Rotation der Antriebswelle die Arbeitsmaschine anzutreiben, sowie einen Drehgeber mit einem an der rotierbaren Antriebswelle angebrachten Magneten und einem in einem Soll-Abstand von dem Magneten angeordneten, d.h. montierten Stator mit einem Sensor. Der Magnet ist hierbei an einer Stirnseite eines freien Endes der rotierbaren Antriebswelle angebracht. Der Sensor umfasst einen Hallsensor und ist ausgebildet, wenigstens eine Komponente des von dem an der rotierbaren Antriebswelle angebrachten Magneten erzeugten Magnetfelds zu erfassen, welche von dem Abstand zwischen dem Magneten und dem Hallsensor abhängt. Der Drehgeber ist ausgebildet, auf der Grundlage, der von dem Hallsensor erfassten wenigstens einen Komponente des Magnetfelds den Ist-Abstand zwischen dem an der rotierbaren Antriebswelle angebrachten Magneten und dem Stator des Drehgebers zu erfassen, d.h. zu bestimmen. Die Kraftmaschine gemäß dem ersten Aspekt umfasst ferner eine Steuereinrichtung, welche ausgebildet ist, auf der Grundlage eines Vergleichs des von dem Drehgeber erfassten Ist-Abstands mit wenigstens einem Abstandsschwellenwert bzw. Abstandssollwert zu bestimmen, d.h. zu entscheiden, ob die Kraftmaschine wartungsbedürftig ist und/oder ob die Antriebswelle und der Drehgeber der Kraftmaschine korrekt eingebaut sind.

Gemäß einer Ausführungsform umfasst die Kraftmaschine gemäß dem ersten Aspekt ferner einen Motor, an welchen die rotierbare Antriebswelle gekoppelt ist, und welcher ausgebildet ist, die rotierbare Antriebswelle in Rotation zu versetzen.

In einer Ausführungsform umfasst die Kraftmaschine gemäß dem ersten Aspekt ein oder mehrere Lager, insbesondere Kugellager und/oder Gleitlager, welche ausgebildet sind, die Antriebswelle rotierbar zu lagern.

Gemäß einer Ausführungsform ist der an der rotierbaren Antriebswelle angebrachte Magnet als ein Permanentmagnet, insbesondere als ein Diametralmagnet ausgebildet. Der Hallsensor kann vorzugsweise als ein 3D-Hallsensor ausgebildet sein. Der Magnet, insbesondere Diametralmagnet, kann einen Permanentmagneten oder magnetisierte Ferrite umfassen.

Gemäß einer Ausführungsform umfasst die Kraftmaschine gemäß dem ersten Aspekt ferner eine Kommunikationsschnittstelle, welche ausgebildet ist, ein Signal, insbesondere über einen Kommunikationsbus und/oder ein Kommunikationsnetzwerk, zu versenden, um die Wartung der wartungsbedürftigen Kraftmaschine und/oder eine Überprüfung des korrekten Einbaus der Antriebswelle und des Drehgebers der Kraftmaschine zu veranlassen.

In einer Ausführungsform ist der Drehgeber ausgebildet, über einen Zeitraum zu einer Vielzahl von Zeitpunkten den Ist-Abstand zwischen dem an der rotierbaren Antriebswelle angebrachten Magneten und dem Stator des Drehgebers zu erfassen, wobei die Steuereinrichtung ausgebildet ist, auf der Grundlage eines Vergleichs der von dem Drehgeber über den Zeitraum zu der Vielzahl von Zeitpunkten erfassten Abstände mit dem wenigstens einem Abstandsschwellenwert zu bestimmen, ob die Kraftmaschine wartungsbedürftig ist und/oder die Antriebswelle und der Drehgeber der Kraftmaschine korrekt eingebaut sind.

Gemäß einer Ausführungsform ist die Steuereinrichtung ausgebildet, für den Vergleich des von dem Drehgeber erfassten Ist-Abstands mit dem wenigstens einen Abstandsschwellenwert einen minimalen Ist-Abstand und/oder einen maximalen Ist-Abstand gegenüber dem wenigstens einen Abstandsschwellenwert abzugleichen.

In einer Ausführungsform ist die rotierbare Antriebswelle als rotierbare Schneckenwelle ausgebildet, welche ausgebildet ist, ein Zahnrad der Arbeitsmaschine anzutreiben.

Gemäß einem zweiten Aspekt wird die vorstehend genannte Aufgabe durch ein Verfahren gelöst zum Überprüfen der Wartungsbedürftigkeit und/oder zur Einbaukontrolle einer Kraftmaschine bzw. Antriebsvorrichtung zum Antreiben einer Arbeitsmaschine bzw. Abtriebsvorrichtung, wobei die Kraftmaschine eine rotierbare Antriebswelle umfasst, welche ausgebildet ist, bei einer Rotation der Antriebswelle die Arbeitsmaschine anzutreiben. Das Verfahren gemäß dem zweiten Aspekt umfasst:
Erfassen mittels eines Drehgebers des Ist-Abstands zwischen einem an einer Stirnseite eines freien Endes der rotierbaren Antriebswelle angebrachten Magneten des Drehgebers und einem Stator des Drehgebers mit einem Hallsensor, welcher in einem Soll-Abstand von dem Magneten angeordnet ist; und
Bestimmen auf der Grundlage eines Vergleichs des von dem Drehgeber erfassten Ist-Abstands mit wenigstens einem Abstandsschwellenwert bzw. Abstandssollwert, ob die Kraftmaschine wartungsbedürftig ist und/oder ob die Antriebswelle und der Drehgeber der Kraftmaschine korrekt eingebaut sind.

Im Folgenden wird die Erfindung anhand von Ausführungsbeispielen und den Figuren näher beschrieben. In den Figuren zeigen:
- Fig. 1: eine schematische Darstellung einer Kraftmaschine gemäß einer Ausführungsform mit einem Drehgeber und einer Antriebswelle zum Antreiben einer Arbeitsmaschine;
- Fig. 2a-c: eine perspektivische Ansicht, eine Draufsicht im Querschnitt und eine Detailansicht einer Kraftmaschine gemäß einer Ausführungsform mit einem Drehgeber und einer Antriebswelle zum Antreiben einer Arbeitsmaschine;
- Fig. 3a-c: Diagramme zur Veranschaulichung eines Abgleichs einer Vielzahl von erfassten Ist-Abständen zwischen dem Magneten und dem Stator des Drehgebers einer Kraftmaschine gemäß einer Ausführungsform; und
- Fig. 4: ein Flussdiagramm, welches Schritte eines erfindungsgemäßen Verfahrens zum Überprüfen der Wartungsbedürftigkeit und/oder zur Einbaukontrolle einer Kraftmaschine gemäß einer Ausführungsform zeigt.

In der folgenden ausführlichen Beschreibung wird auf die beiliegenden Figuren Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen der vorliegenden Erfindung werden unter Bezugnahme auf die Figuren beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der vorliegenden Erfindung zu vermitteln.

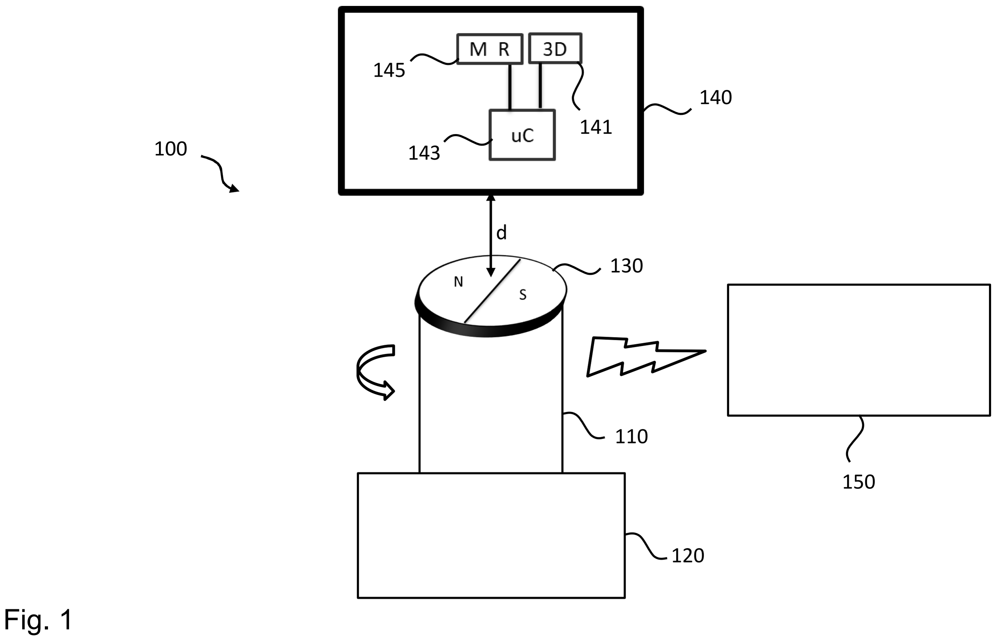

Die Figur 1 zeigt eine schematische Darstellung einer Kraftmaschine 100 bzw. Antriebsvorrichtung 100 gemäß einer Ausführungsform, welche eine rotierbare Antriebswelle 110 zum Antreiben einer Arbeitsmaschine 150 bzw. Abtriebsvorrichtung 150 umfasst sowie einen Drehgeber mit einem Magneten 130 und einem Stator 140 mit einem nachstehend detaillierter beschriebenen Sensor 141.

Wie in Figur 1 dargestellt, umfasst die Kraftmaschine 100 ferner einen Motor 120, beispielsweise einen Elektromotor 120, an welchen die rotierbare Antriebswelle 110 gekoppelt ist und welcher ausgebildet ist, die rotierbare Antriebswelle 110 in Rotation zu versetzen.

Der Magnet 130 ist an einer Stirnseite eines freien Endes der rotierbaren Antriebswelle 110 angebracht und derart befestigt, dass der Magnet 130 an der Rotation der rotierbaren Antriebswelle 110 teilnimmt. Bei der Montage des Magneten 130 und des Stators 140 des Drehgebers werden diese in einem Abstand voneinander angeordnet, der einem beispielsweise für die Kalibrierung des Sensors 141 vorgegebenen Soll-Abstand entsprechen soll. Erfindungsgemäß ist der Sensor 141 des Drehgebers ausgebildet, nach der Montage und / oder im Betrieb der Kraftmaschine 100 einen Ist-Abstand d zwischen dem an der rotierbaren Antriebswelle 110 angebrachten Magneten 130 und dem Stator 140 des Drehgebers zu erfassen, d.h. zu bestimmen.

Wie in Figur 1 dargestellt, umfasst die Kraftmaschine 100 ferner eine Steuereinrichtung 143, welche beispielsweise einen Mikro-Controller 143 umfassen kann und ausgebildet ist, auf der Grundlage eines Vergleichs des von dem Drehgeber erfassten Ist-Abstands d mit wenigstens einem Abstandsschwellenwert bzw. Abstandssollwert zu bestimmen, d.h. zu entscheiden, ob die Kraftmaschine 100 wartungsbedürftig ist und/oder ob die Antriebswelle und der Drehgeber der Kraftmaschine korrekt eingebaut sind. Beispielsweise kann die Steuereinrichtung 143 ausgebildet sein, zu entscheiden, dass die Kraftmaschine 100 aufgrund von Verschleiß wartungsbedürftig ist und/oder dass die Antriebswelle 110 und der Drehgeber der Kraftmaschine 100 nicht korrekt eingebaut sind, wenn der aktuell erfasste Ist-Abstand d zwischen dem Magneten 130 und dem Stator 140 des Drehgebers größer als ein maximaler Abstandsschwellenwert und/oder kleiner als ein minimaler Abstandsschwellenwert ist.

Bei der in Figur 1 dargestellten Ausführungsform ist die Steuereinrichtung 143 als Teil des Stators 140 des Drehgebers ausgebildet. In weiteren Ausführungsformen kann die Steuereinrichtung auch separat von dem Stator 140 ausgebildet sein. Beispielsweise kann es sich dabei um eine Steuereinrichtung handeln, die den von dem Drehgeber bestimmten Ist-Abstand d erhält und auch den Motor 110 der Kraftmaschine 100 und ggf. auch die Arbeitsmaschine 150 steuert. Dies kann insbesondere dann vorteilhaft sein, wenn die Steuereinrichtung ausgebildet ist, die Entscheidung über die Wartungsbedürftigkeit bzw. den korrekten Einbau auf der Grundlage einer Vielzahl von über einen Zeitraum erfassten Ist-Abständen d zu treffen, wie dies nachstehend detaillierter beschrieben wird. In einer Ausführungsform kann die Kraftmaschine 100 ferner eine Kommunikationsschnittstelle aufweisen, welche ausgebildet ist, ein Signal, insbesondere über einen Kommunikationsbus oder ein Kommunikationsnetzwerk, beispielsweise einen CAN-Bus oder ein Mobilfunknetzwerk, zu versenden, um die Wartung der wartungsbedürftigen Kraftmaschine 100 und/oder eine Überprüfung des korrekten Einbaus der rotierbaren Antriebswelle 110 und des Drehgebers der Kraftmaschine 100 zu veranlassen.

Bei der in Figur 1 dargestellten Ausführungsform ist der Magnet 130 des Drehgebers als ein Diametralmagneten 130 ausgebildet. Der Diametralmagnet 130 kann einen Permanentmagneten oder magnetisierte Ferrite umfassen. Der Sensor 141 umfasst einen Hallsensor 141, vorzugsweise einen 3D-Hallsensor 141, welcher ausgebildet ist, wenigstens eine Komponente des von dem an der rotierbaren Antriebswelle 110 angebrachten Diametralmagneten 130 erzeugten Magnetfelds zu erfassen, welche von dem Abstand zwischen dem Diametralmagneten 130 und dem Hallsensor 141, d.h. dem Stator 140, abhängt. Der Drehgeber ist somit (beispielsweise mittels der Steuereinrichtung 143) ausgebildet, auf der Grundlage der von dem Hallsensor 141 erfassten wenigstens einen Komponente des Magnetfelds den Ist-Abstand d zwischen dem an der rotierbaren Antriebswelle 110 angebrachten Diametralmagneten 130 und dem Hallsensor 141 des Stators 140 des Drehgebers zu erfassen.

Bei der in Figur 1 dargestellten Ausführungsform umfasst der Stator 140 des Drehgebers ferner einen magnetresistiven Winkelsensor 145 zur Erfassung einer Positions- und/oder Bewegungsinformationen der rotierbaren Antriebswelle 110 der Kraftmaschine 100.

Bei den Positions- und/oder Bewegungsinformationen der rotierbaren Antriebswelle 110 kann es sich beispielsweise um eine Winkelstellung, Drehzahl, Drehrichtung und/oder Winkelbeschleunigung der rotierbaren Antriebswelle 110 handeln.

In einer Ausführungsform kann der Drehgeber (beispielsweise mittels der Steuereinrichtung 143) ausgebildet sein, auf der Grundlage der von dem Hallsensor 141 erfassten wenigstens einen Komponente des von dem Diametralmagneten 130 erzeugten Magnetfelds und auf der Grundlage der von dem Winkelsensor 145 erfassten Winkelposition der rotierbaren Antriebswelle 110 den Ist-Abstand d zwischen dem an der rotierbaren Antriebswelle 110 angebrachten Diametralmagneten 130 und dem Hallsensor 141 des Stators 140 des Drehgebers zu erfassen.

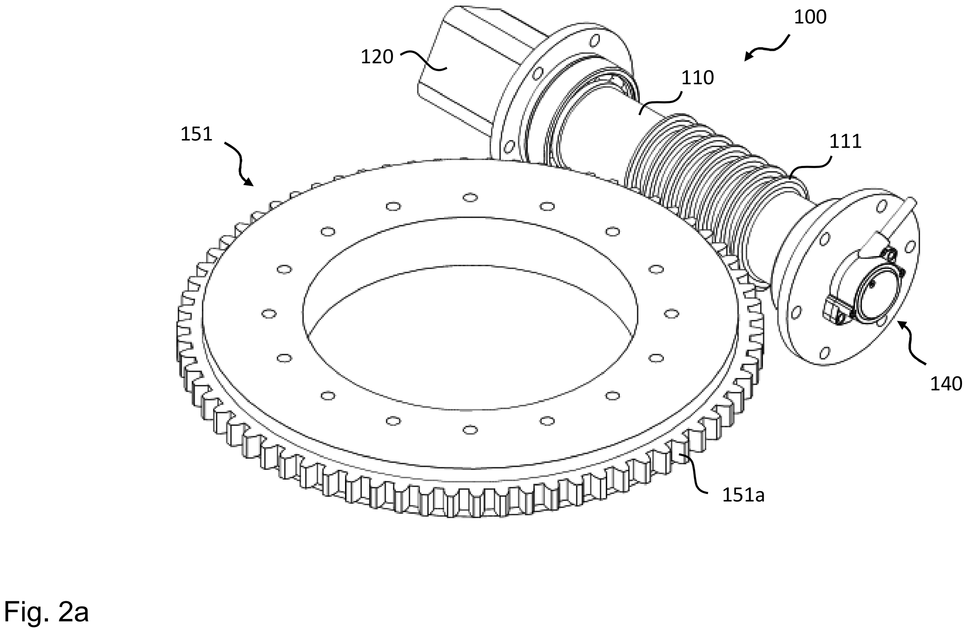

Die Figuren 2a-c zeigen eine perspektivische Ansicht, eine Draufsicht im Querschnitt und eine Detailansicht der Kraftmaschine 100 gemäß einer Ausführungsform mit einem Drehgeber und einer rotierbaren Antriebswelle 110 zum Antreiben einer Arbeitsmaschine 150. Bei der in den Figuren 2a-c dargestellten Ausführungsform ist die Kraftmaschine 100 in Form eines Schwenkantriebs ausgebildet. Dabei ist die rotierbare Antriebswelle 110 mit einem Schneckenaußengewinde 111, d.h. als Schneckenwelle 110 ausgebildet, welches in eine Vielzahl von Zähnen 151a eines Zahnrads 151 der Arbeitsmaschine 150 eingreift, um bei einer Rotation der Schneckenwelle 110 das Zahnrad zu rotieren.

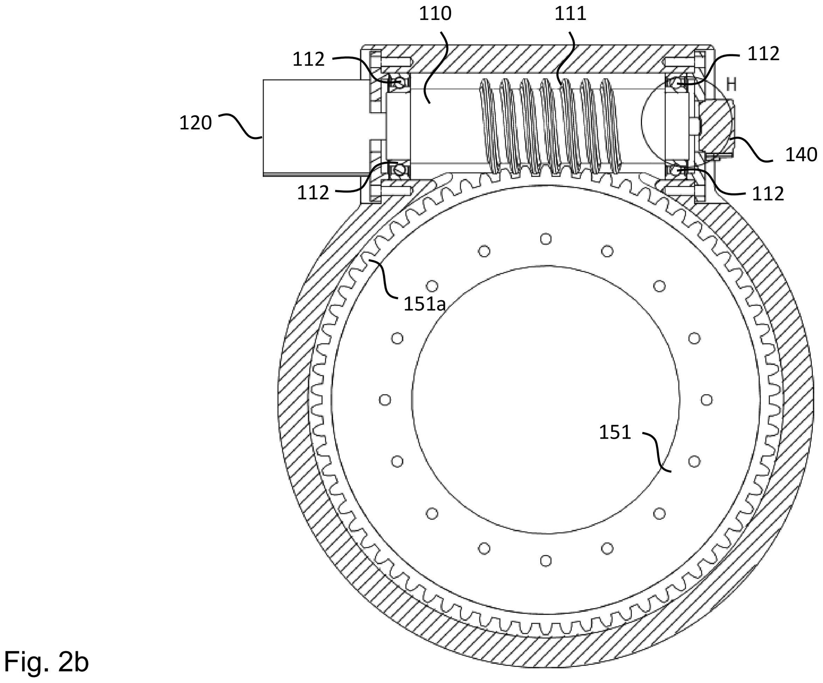

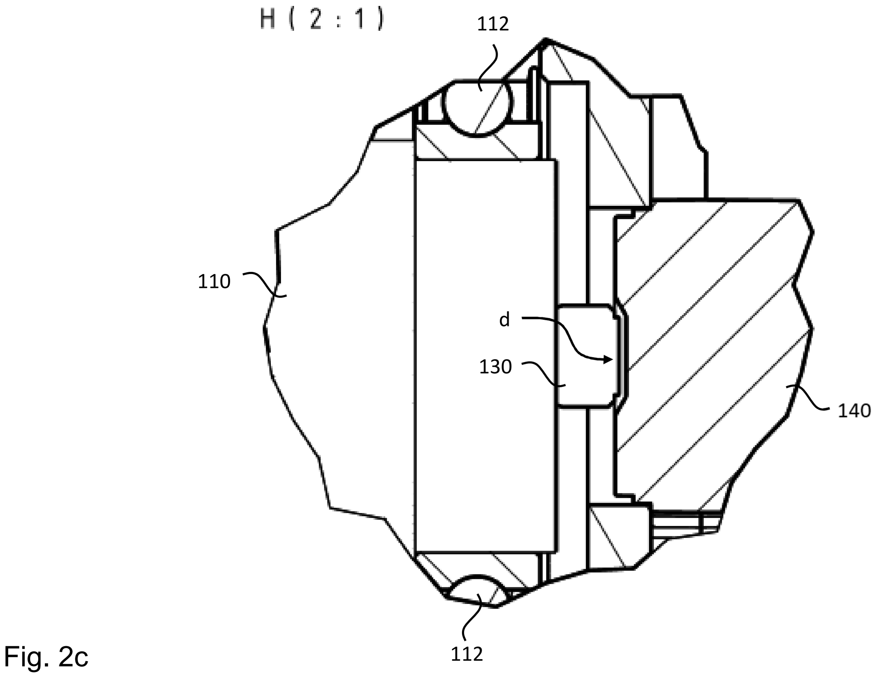

Bei der in den Figuren 2a-c dargestellten Ausführungsform ist der Magnet 130 in Form des Diametralmagneten 130 an der Stirnseite eines freien Endes der rotierbaren Schneckenwelle 110 angebracht, wie sich dies beispielsweise der Figur 2b oder 2c entnehmen lässt. Bei dieser Ausführungsform ist der Hallsensor 141 des Drehgebers ausgebildet, den axialen Ist-Abstand, d.h. die Dicke des Luftspalts d (der in Figur 2c ersichtlich ist) zwischen dem an der rotierbaren Antriebswelle 110 angebrachten Diametralmagneten 130 und dem Stator 140 des Drehgebers zu erfassen.

Bei der in den Figuren 2a-c dargestellten Ausführungsform umfasst die Kraftmaschine 100 ein oder mehrere Lager 112, insbesondere Kugellager und/oder Gleitlager 112, welche ausgebildet sind, die Antriebswelle 110 rotierbar zu lagern. Beispielsweise kann ein Verschleiß dieser Lager 112 dazu führen, dass der Ist-Abstand d mehr und mehr von einem Soll-Abstand, zwischen dem an der rotierbaren Antriebswelle 110 angebrachten Diametralmagneten 130 und dem Stator 140 des Drehgebers abweicht, was aufgrund der erfindungsgemäßen Ausgestaltung der Kraftmaschine 100 automatisch erfasst werden kann.

In einer Ausführungsform ist der Drehgeber ausgebildet, über einen Zeitraum zu einer Vielzahl von Zeitpunkten den Ist-Abstand d zwischen dem an der rotierbaren Antriebswelle 110 angebrachten Diametralmagneten 130 und dem Stator 140 des Drehgebers zu erfassen, wobei die Steuereinrichtung, d.h. die Steuereinrichtung 143 des Drehgebers oder die Steuereinrichtung der Kraftmaschine 100, ausgebildet ist, auf der Grundlage eines Vergleichs der von dem Drehgeber über den Zeitraum zu der Vielzahl von Zeitpunkten erfassten Abstände mit dem wenigstens einem Abstandsschwellenwert zu bestimmen, ob die Kraftmaschine 100 wartungsbedürftig ist und/oder die rotierbare Antriebswelle 110 und der Drehgeber, d.h. der Diametralmagnet 130 und/oder der Stator 140 der Kraftmaschine 100 korrekt eingebaut sind.

Gemäß einer Ausführungsform ist die Steuereinrichtung, d.h. die Steuereinrichtung 143 des Drehgebers oder die Steuereinrichtung der Kraftmaschine 100 ausgebildet, für den Vergleich des von dem Drehgeber erfassten Ist-Abstands d mit dem wenigstens einen Abstandsschwellenwert einen minimalen Ist-Abstand und/oder einen maximalen Ist-Abstand gegenüber dem wenigstens einen Abstandsschwellenwert abzugleichen. Dies ist vorteilhaft, da ein vorgegebener Abstandsschwellenwert je nach Konstruktion der Kraftmaschine 100 und/oder der Arbeitsmaschine 150 unterschiedlich sein kann. Beispielsweise kann es für jede Bauform einen anderen Schwellenwert geben, welcher definiert, wann die Kraftmaschine 100 als wartungsbedürftig gilt. Dieser Abstandswert kann insbesondere vom Hersteller der Kraftmaschine 100 festgelegt werden und entweder permanent oder zu diskreten Ereignissen mit dem Ist-Wert verglichen werden, was mit dem folgenden illustrativen Beispiel veranschaulicht wird.

In einem Anwendungsszenario kann der Drehgeber beispielsweise auf einen Nennabstand von 1 mm zwischen dem Diametralmagneten 130 und dem Stator 140 eingebaut werden. Ein Betreiber der Kraftmaschine 100 definiert 1,3 und 0,7 mm als Max- und Min-Schwellenwert (oder +/- 0,3 mm gegenüber der nominalen Einbaulage). Sollten diese Werte unterschritten werden, möchte der Betreiber der Kraftmaschine 100 informiert werden. So lange die Lager 112 der Kraftmaschine 100 neu sind, bleibt der Diametralmagnet 130 in einem Abstand von 1,0 mm zum Hallsensor 141. Wenn nun Verschleiß auftritt, nutzen sich die Lager 112 ab und der Diametralmagnet 130 fängt an sich relativ zum Hallsensor 140 zu bewegen. In der Regel wird sich das Spiel dabei vergrößern, so dass sich je nach Last und Drehrichtung der Diametralmagnet 130 auf den Hallsensor 141 zu oder von ihm wegbewegt, d.h. der Ist-Abstand d kleiner oder größer wird. Dies kann beispielsweise bedeuten, dass sich der Ist-Abstand bei Drehrichtung im Uhrzeigersinn verringert und bei Drehung gegen den Uhrzeigersinn vergrößert.

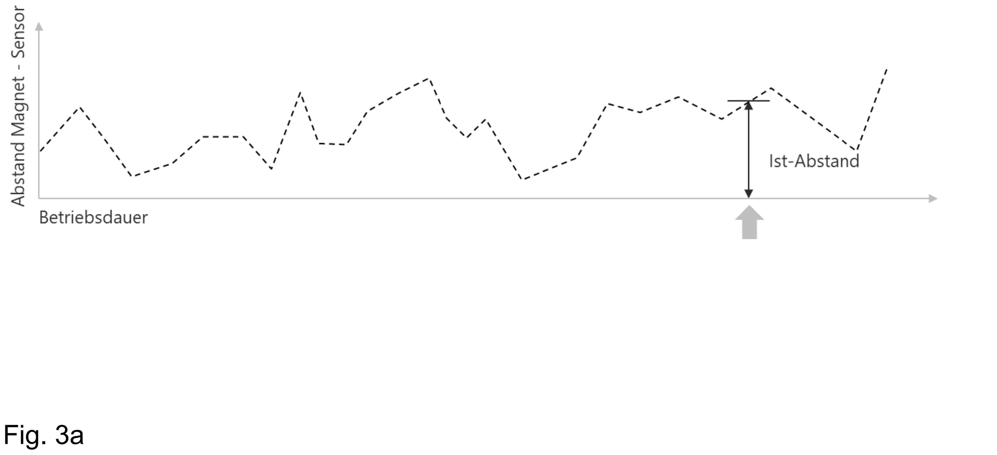

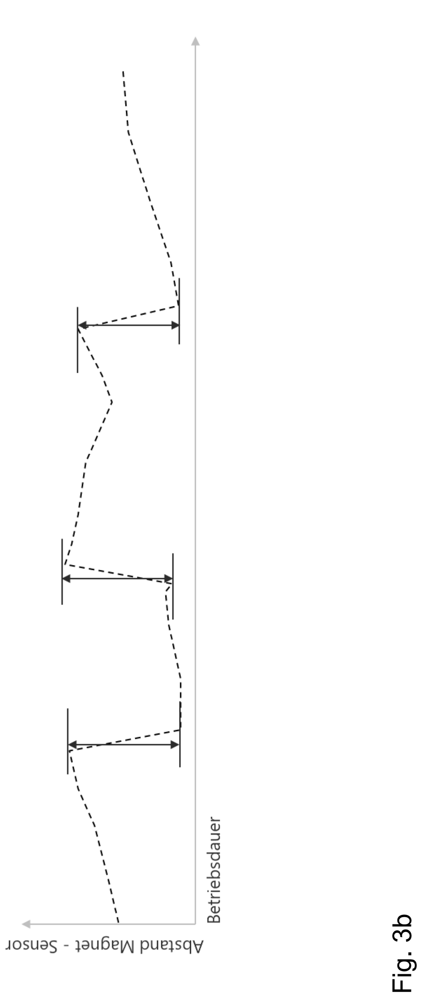

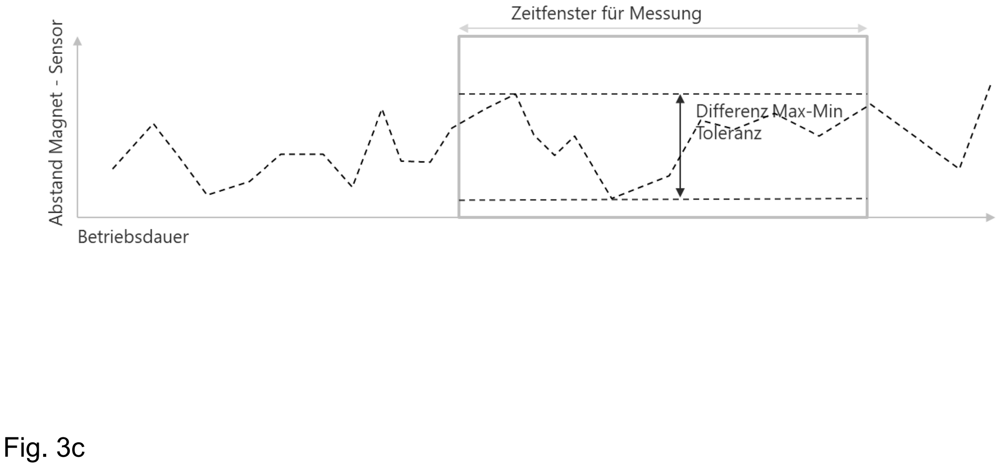

Wie in den Figuren 3a-c dargestellt, kann der Abgleich mit einem minimalen Ist-Abstand und/oder einen maximalen Ist-Abstand, gegenüber dem wenigstens einen Abstandsschwellenwert auf unterschiedliche Weisen erfolgen. Bei der in Figur 3a dargestellten Ausführungsform wird der Ist-Abstand d fortlaufend, beispielsweise jede Sekunde, erfasst. Somit kann sichergestellt werden, dass ein Überschreiten und/oder Unterschreiten der Schwellenwerte erfasst wird. Bei der in Figur 3b dargestellten Ausführungsform erfolgt die Erfassung des Ist-Abstands d zu ausgewählten Zeitpunkten, zu denen eine Minimal- oder Maximallage erwartet wird. Dies könnte zum Beispiel bei einem Lastwechsel der Fall sein, wenn der Antrieb 100 die Drehrichtung wechselt. Gemäß einer Ausführungsform kann eine Differenz zwischen den gemessenen Werten unmittelbar vor und nach dem Richtungswechsel gebildet werden, was dem Spiel der Lager 112 zum jeweiligen Zeitpunkt entspricht. Bei der in Figur 3c dargestellten Ausführungsform werden die Ist-Abstände fortlaufend gemessen, aber innerhalb eines diskreten Zeitfensters (z.B. 30 Sekunden) verglichen. Dabei wird die Differenz zwischen Maximal- und Minimalwert gebildet, welche dem Spiel der Lager 112 entsprechen kann. Es ist zwar nicht sichergestellt, dass die globalen minimalen oder maximalen Abstandswerte in dem Zeitfenster von z.B. 30 Sekunden erfasst werden, aber durch das begrenzte Zeitfenster wird direkt ein Spiel der Lager 112 erfasst, so dass Einflüsse ignoriert werden können, die langfristig die Genauigkeit einer Absolutwert-Messung beeinträchtigen könnten, wie beispielsweise Temperaturschwankungen, Alterung und dergleichen.

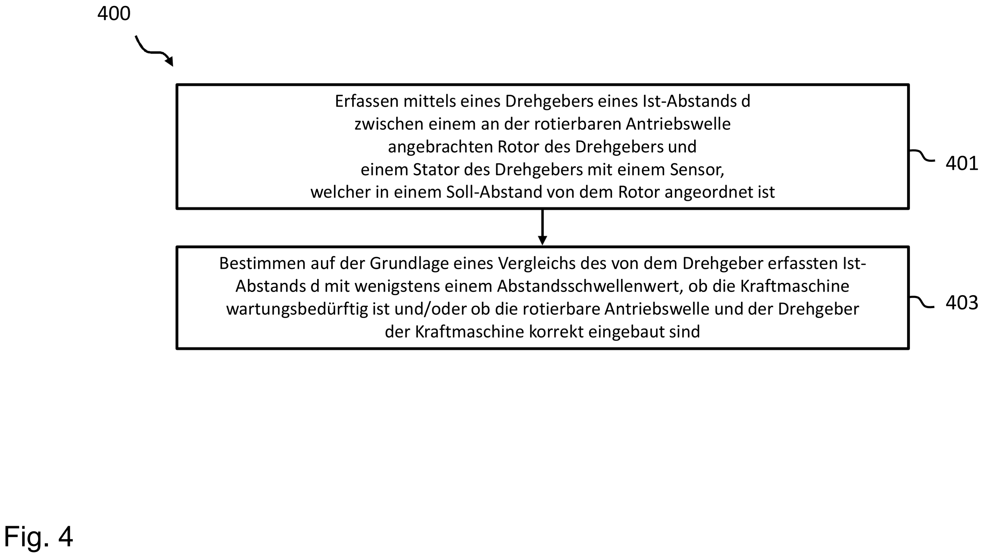

Figur 4 ist ein Flussdiagramm, welches Schritte eines erfindungsgemäßen Verfahrens 400 zum Überprüfen der Wartungsbedürftigkeit und/oder zur Einbaukontrolle der Kraftmaschine 100 gemäß einer Ausführungsform zeigt. Das Verfahren 400 umfasst einen Schritt 401 des Erfassens mittels des Drehgebers des Ist-Abstands d zwischen dem an einer Stirnseite der der rotierbaren Antriebswelle 110 angebrachten Diametralmagneten 130 des Drehgebers und dem Stator 140 des Drehgebers mit einem Hallsensor 141, welcher in einem Soll-Abstand von dem Diametralmagneten 130 angeordnet ist. Ferner umfasst das Verfahren 400 einen Schritt 403 des Bestimmens auf der Grundlage eines Vergleichs des von dem Drehgeber erfassten Ist-Abstands d mit wenigstens einem Abstandsschwellenwert bzw. Abstandssollwert, ob die Kraftmaschine 100 wartungsbedürftig ist und/oder ob die rotierbare Antriebswelle 110 und der Drehgeber, d.h. der Diametralmagnet 130 und der Stator 140 des Drehgebers, der Kraftmaschine 100 korrekt eingebaut sind.

## Patentansprüche

1. Kraftmaschine (100) zum Antreiben einer Arbeitsmaschine (150), wobei die Kraftmaschine (100) umfasst:
eine rotierbare Antriebswelle (110), welche ausgebildet ist, bei einer Rotation der rotierbaren Antriebswelle (110) die Arbeitsmaschine (150) anzutreiben;
einen Drehgeber (130, 140) mit einem an einer Stirnseite eines freien Endes der rotierbaren Antriebswelle (110) angebrachten Magneten (130) und einem in einem Soll-Abstand von dem Magneten (130) angeordneten Stator (140) mit einem Sensor (141), wobei
der Sensor (141) einen Hallsensor (141) umfasst, welcher ausgebildet ist, wenigstens eine Komponente des von dem Magneten (130) erzeugten Magnetfelds zu erfassen, welche von dem Abstand zwischen dem Magneten (130) und dem Hallsensor (141) abhängt, und wobei
der Drehgeber (130, 140) ausgebildet ist, auf der Grundlage der von dem Hallsensor (141) erfassten wenigstens eine Komponente des Magnetfelds den Ist-Abstand (d) zwischen dem Magneten (130) und dem Stator (140) des Drehgebers (130, 140) zu erfassen,
eine Steuereinrichtung (143), welche ausgebildet ist, auf der Grundlage eines Vergleichs des von dem Drehgeber (130, 140) erfassten Ist-Abstands (d) mit wenigstens einem Abstandsschwellenwert zu bestimmen, ob die Kraftmaschine (100) wartungsbedürftig ist und / oder ob die rotierbare Antriebswelle (110) und der Drehgeber (130, 140) der Kraftmaschine (100) korrekt eingebaut sind.

2. Kraftmaschine (100) nach Anspruch 1, wobei die Kraftmaschine (100) ferner einen Motor (120) umfasst, an welchen die rotierbare Antriebswelle (110) gekoppelt ist und welcher ausgebildet ist, die rotierbare Antriebswelle (110) in Rotation zu versetzen und ein oder mehrere Lager (112), insbesondere Kugellager und/oder Gleitlager, umfasst, welche ausgebildet sind, die rotierbare Antriebswelle (110) rotierbar zu lagern.

3. Kraftmaschine (100) nach einem der vorhergehenden Ansprüche, wobei der Drehgeber (130, 140) ausgebildet ist, Positions- und / oder Bewegungsinformationen der rotierbaren Antriebswelle (110) mit einem im Stator (140) vorgesehenen Winkelsensor (145), vorzugsweise mit einem magnetresistiven Winkelsensor (145) zu erfassen und diese Informationen zur Bestimmung des Ist-Abstands (d) zwischen dem Magneten (130) und dem Hallsensor (141) des Stators (140) des Drehgebers (130, 140) heranzuziehen.

4. Kraftmaschine (100) nach einem der vorhergehenden Ansprüche, wobei der Magnet (130) als ein Permanentmagnet (130), vorzugsweise als ein Diametralmagnet, und der Hallsensor (141) als ein 3D-Hallsensor ausgebildet ist.

5. Kraftmaschine (100) nach einem der vorhergehenden Ansprüche, wobei die Kraftmaschine (100) ferner eine Kommunikationsschnittstelle umfasst, welche ausgebildet ist, ein Signal, insbesondere über einen Kommunikationsbus und / oder ein Kommunikationsnetzwerk, zu versenden, um eine Wartung der wartungsbedürftigen Kraftmaschine und / oder eine Überprüfung des korrekten Einbaus der rotierbaren Antriebswelle (110) und des Drehgebers (130, 140) der Kraftmaschine (100) zu veranlassen.

6. Kraftmaschine (100) nach einem der vorhergehenden Ansprüche, wobei der Drehgeber (130, 140) ausgebildet ist, über einen Zeitraum zu einer Vielzahl von Zeitpunkten den Ist-Abstand (d) zwischen dem an der rotierbaren Antriebswelle (110) angebrachten Magnet (130) und dem Stator (140) des Drehgebers (130, 140) zu erfassen, und
wobei die Steuereinrichtung (143) ausgebildet ist, auf der Grundlage eines Vergleichs der von dem Drehgeber (130, 140) über den Zeitraum zu der Vielzahl von Zeitpunkten erfassten Ist-Abstände (d) mit dem wenigstens einem Abstandsschwellenwert zu bestimmen, ob die Kraftmaschine (100) wartungsbedürftig ist und / oder ob die rotierbare Antriebswelle (110) und der Drehgeber (130, 140) der Kraftmaschine (100) korrekt eingebaut sind.

7. Kraftmaschine (100) nach einem der vorhergehenden Ansprüche, wobei die Steuereinrichtung (143) ausgebildet ist, für den Vergleich des von dem Drehgeber (130, 140) erfassten Ist-Abstands (d) mit dem wenigstens einen Abstandsschwellenwert einen minimalen Ist-Abstand und/oder einen maximalen Ist-Abstand gegenüber dem wenigstens einen Abstandsschwellenwert abzugleichen.

8. Kraftmaschine (100) nach einem der vorhergehenden Ansprüche, wobei die rotierbare Antriebswelle (110) als rotierbare Schneckenwelle (110) ausgebildet ist, welche ausgebildet ist, ein Zahnrad (151) der Arbeitsmaschine (150) anzutreiben.

9. Verfahren (400) zum Überprüfen der Wartungsbedürftigkeit und / oder zur Einbaukontrolle einer Kraftmaschine (100) zum Antreiben einer Arbeitsmaschine (150), wobei die Kraftmaschine (100) eine rotierbare Antriebswelle (110) umfasst, welche ausgebildet ist, bei einer Rotation der rotierbaren Antriebswelle (110) die Arbeitsmaschine (150) anzutreiben, wobei das Verfahren (400) umfasst:
Erfassen (401) mittels eines Drehgebers (130, 140) eines Ist-Abstands (d) zwischen einem an einer Stirnseite eines freien Endes der rotierbaren Antriebswelle (110) angebrachten Magneten (130) des Drehgebers (130, 140) und einem Stator (140) des Drehgebers (130, 140) mit einem Hallsensor (141), welcher in einem Soll-Abstand von dem Magnet (130) angeordnet ist; und
Bestimmen (403) auf der Grundlage eines Vergleichs des von dem Drehgeber (130, 140) erfassten Ist-Abstands (d) mit wenigstens einem Abstandsschwellenwert, ob die Kraftmaschine (100) wartungsbedürftig ist und / oder ob die rotierbare Antriebswelle (110) und der Drehgeber (130, 140) der Kraftmaschine (100) korrekt eingebaut sind.

10. Verfahren (400) nach Anspruch 9, wobei zusätzlich Positions- und / oder Bewegungsinformationen der Antriebswelle (110) von dem Drehgeber (130, 140) erfasst werden und zur Bestimmung des Ist-Abstands (d) zwischen dem an einer Stirnseite eines freien Endes der rotierbaren Antriebswelle (110) angebrachten Magneten (130) und dem Hallsensor (141) des Stators (140) des Drehgebers (130, 140) herangezogen werden.

11. Verfahren (400) nach einem der Ansprüche 9 und 10, wobei der Ist-Abstand (d) über einen Zeitraum zu einer Vielzahl von Zeitpunkten erfasst wird und die Bestimmung auf einem Vergleich der über den Zeitraum erfassten Abstände mit dem Abstandsschwellenwert basiert.

12. Verfahren (400) nach einem der Ansprüche 9 bis 11, wobei ein minimaler und / oder ein maximaler Ist-Abstand (d) mit dem Abstandsschwellenwert abgeglichen wird.

13. Verfahren (400) nach einem der Ansprüche 9 bis 12, wobei der Ist-Abstand (d) fortlaufend erfasst wird, insbesondere in regelmäßigen Zeitintervallen.

14. Verfahren (400) nach einem der Ansprüche 9 bis 13, wobei der Ist-Abstand (d) zu ausgewählten Zeitpunkten erfasst wird, zu denen eine Minimal- oder Maximallage der Antriebswelle (110) erwartet wird, insbesondere bei Lastwechseln oder Drehrichtungswechseln.

15. Verfahren (400) nach einem der Ansprüche 9 bis 14, wobei bei Überschreiten oder Unterschreiten des Abstandsschwellenwerts ein Signal über eine Kommunikationsschnittstelle ausgegeben wird, um eine Wartung oder Einbauüberprüfung zu veranlassen.
